# EUROPÄISCHE PATENTSCHRIFT

(11) **EP 0 856 444 B1**
(45) Veröffentlichungstag und Bekanntmachung des Hinweises auf die Patenterteilung: **11.10.2000**
(21) Anmeldenummer: 97120799.8
(22) Anmeldetag: 27.11.1997
(51) Int. Cl.: B60S 1/08

(54) **Regensensor**
Rain sensor
Capteur de pluie

(30) Priorität: 31.01.1997 DE 19703570
(43) Veröffentlichungstag der Anmeldung: 05.08.1998
(73) Patentinhaber: Mannesmann VDO Aktiengesellschaft, 60388 Frankfurt am Main (DE)
(72) Erfinder: Egger, Armin, 61350 Bad Homburg (DE); Schröder, Hans-Joachim, 65189 Wiesbaden (DE)
(74) Vertreter: Rassler, Andrea, Dipl.-Phys.

(56) Entgegenhaltungen:
- WO-A-90/08680
- DE-A- 4 423 888
- DE-A- 4 424 028
- DE-A- 19 547 681

## Beschreibung

Die Erfindung betrifft einen Regensensor, bestehend aus einer auf der Außenseite einer Fahrzeugscheibe eines Kraftfahrzeuges angeordneten Sensorstruktur, welche mit mindestens einer Zuleitung zur Herstellung einer leitenden Verbindung der Sensorstruktur mit einem elektrischen Potential innerhalb des Kraftfahrzeuges verbunden ist.

Es ist bekannt, an der Fahrzeugscheibe eines Kraftfahrzeuges im Bereich des Scheibenwischers Regensensoren anzuordnen, siehe DE-A-4 424 028 oder DE-A-195 47 681.

Diese Regensensoren liefern in Abhängigkeit der jeweiligen sich auf der Fahrzeugscheibe befindlichen Feuchtigkeit ein elektrisches Signal an eine Auswerteschaltung innerhalb des Kraftfahrzeuges.

Dabei weisen die Sensoren Strukturen in Form von zwei ineinander verkämmten, streifenförmigen Leitbahnen auf. Jede Leitbahn ist dabei mit einem Potential der Auswerteschaltung verbunden. Bei resistiven Sensoren wird durch die auftretenden Wassertropfen eine leitende Verbindung zwischen den beiden Leitbahnen geschaffen. Der Gesamtwiderstand der Sensorstruktur wird dabei verändert. Diese Widerstandsänderung kann zur automatischen Steuerung eines Scheibenwischers genutzt werden.

Bei Sensoren, die sich auf der Außenseite der Fahrzeugscheibe befinden, werden die Leitbahnen über Zuleitungen ins Innere des Fahrzeuges geführt.

Diese Zuleitungen weisen selbst Widerstände auf, die von der Länge der jeweiligen Zuleitung bestimmt werden, was von Fahrzeugtyp zu Fahrzeugtyp unterschiedlich ist. Diese unterschiedlichen Zuleitungswiderstände verfälschen das Sensorsignal, was zur Fehlsteuerung der Scheibenwischer führt und somit zur Gefahr, daß die Fahrzeugscheibe trotz vorhandener Feuchtigkeit nicht ausreichend gereinigt wird.

Die unterschiedlichen Zuleitungswiderstände können nur durch einen Abgleich der Auswerteelektronik für jeden einzelnen Sensor berücksichtigt werden.

Der Erfindung liegt somit die Aufgabe zugrunde, eine Sensoreinheit anzugeben, bei welcher das Sensorsignal nur von der auf der Fahrzeugscheibe vorhandenen Feuchtigkeit abhängt.

Erfindungsgemäß wird die Aufgabe dadurch gelöst, daß zur Bestimmung des Widerstandes der Zuleitung eine Meßleitung außerhalb der Sensorstruktur mit der Zuleitung elektrisch verbunden ist.

Die Erfindung hat somit den Vorteil, daß über die Widerstandsmessung der Zuleitung das Sensorsignal in der Auswerteelektronik während des normalen Scheibenwischerbetriebes zuverlässig bestimmt werden kann, indem das Sensorsignal hinsichtlich des Widerstandswertes der Zuleitung korrigiert wird. Ein aufwendiger Abgleich der Sensorelektronik entfällt. Gleichzeitig können auch die durch Herstellungstoleranzen hervorgerufenen Widerstände korrigiert werden. Auch Widerstände, die aufgrund von Alterungserscheinungen der Kontaktierungen der Zuleitung innerhalb der Lebensdauer des Sensors auftreten, werden zuverlässig erkannt.

Vorteilhafterweise ist die Meßleitung zwischen Fahrzeugscheibenrand und Sensorstruktur mit der Zuleitung verbunden. Die Meßleitung ist dabei in der Nähe der Sensorstruktur mit der Zuleitung verbunden, wobei die Meßleitung in einem Abstand von mindestens 5 mm von der Sensorstruktur entfernt angeordnet ist.

Um den Platzbedarf der Sensorstruktur auf der Fahrzeugscheibe so gering wie möglich zu halten, ist die Meßleitung annähernd parallel zur Zuleitung angeordnet und über dem Fahrzeugscheibenrand mit dem Fahrzeuginneren kontaktiert. Dabei ist die Zuleitung als auch die Meßleitung mit einer Auswerteelektronik verbunden, die gleichzeitig zur Ansteuerung der Scheibenwischer des Kraftfahrzeuges dient.

Sowohl die Sensorstruktur, die Zuleitung als auch die Meßleitung sind in Dünnschichttechnik besonders einfach und kostengünstig herstellbar, da es nur einer Schablonenkorrektur zur Einarbeitung der Meßleitung bedarf.

In einer Ausgestaltung besteht die Sensorstruktur aus zwei kammartig ausgebildeten Leitbahnen, deren ineinandergreifend angeordnete Leitbahnabschnitte die Sensorstruktur bilden und deren leitbahnabschnittfreien Bereiche je eine Zuleitung bilden. Dabei ist zumindest die Breite der ineinandergreifend angeordneten Leitbahnabschnitte der Sensorstruktur über ihre gesamte Länge unkonstant gestaltet. Vorteilhafterweise ist mindestens ein Rand der ineinandergreifenden Leitbahnabschnitte wellenförmig gestaltet. Infolge dieser Ausgestaltung wird die effektive Bahnlänge der Leiterbahn verlängert und die wirksame Widerstandsfläche vergrößert. Dies hat zur Folge daß ein wesentlich geringerer Platzbedarf für die Sensorstruktur benötigt wird, als eine Leiterbahn mit einer konstanten Breite, d. h. mit einer glatten Randgestaltung.

In einer Weiterbildung weisen die Leitbahnabschnitte lichtdurchlässige Rasterpunkte auf, wodurch neue Möglichkeiten zur Anordnung des Regensensors auf der Fahrzeugscheibe im Bereich der Scheibenwischer erschlossen werden.

In einer weiteren Ausbildung ist die Zuleitung und/oder die Meßleitung über eine Kontaktvorrichtung mit einem elektrischen Anschlußkontakt innerhalb des Kraftfahrzeuges verbunden. Diese Kontaktvorrichtung weist eine auf einem flexiblen Träger angeordnete Kontaktleiterbahn auf der Fahrzeugscheibe auf, deren Randbereich umgreifend angeordnet ist, wobei die Kontaktleiterbahn im fahrzeugäußeren Bereich mit der Zuleitung und dem fahrzeuginneren Bereich mit einem Anschlußkontakt leitend verbunden ist. Eine solche kompakte Gestaltung des Kontaktes erlaubt eine Abschirmung der Zuleitung gegen jegliche äußeren Einflüsse, insbesondere gegen Feuchtigkeit. Die flexible Gestaltung erlaubt eine formschlüssige Anpassung an Sensor und Fahrzeugscheibe.

Vorteilhafterweise ist der flexible Träger mittels einer Heißkleberschicht auf der Fahrzeugscheibe befestigt. Die Kontaktleiterbahn ist mittels eines Leitklebers mit der Zuleitung verbunden.

Der direkte elektrische Kontakt zwischen Zuleitung und Kontaktleiterbahn wird auf ein für die Funktionstücktigkeit notwendiges Minimum reduziert.

Die Erfindung läßt zahlreiche Ausführungsbeispiele zu. Eines davon soll anhand der in der Zeichnung dargestellten Figuren näher erläutert werden.

Es zeigt:
- Fig. 1: ein erstes Ausführungsbeispiel der Erfindung
- Fig. 2: ein zweites Ausführungsbeispiel der Erfindung
- Fig. 3: Kontaktvorrichtung

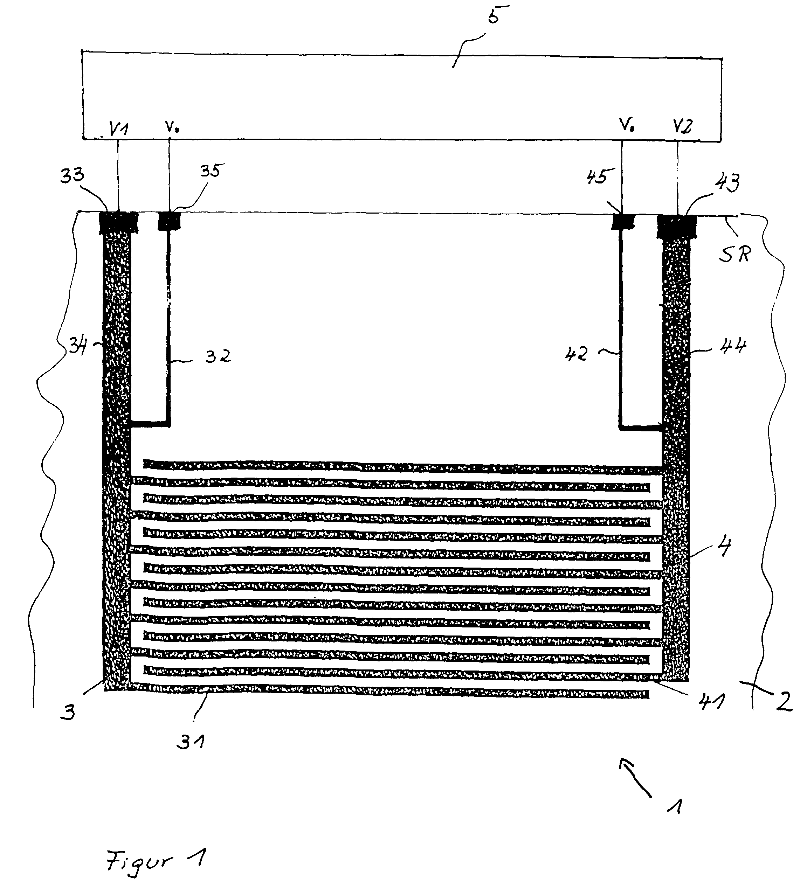

Die Figur 1 zeigt schematisch die gebräuchliche Struktur eines resistiven Regensensors 1, welcher außen auf der Fahrzeugscheibe 2 eines Kraftfahrzeuges im Bereich der Scheibenwischer angeordnet ist. In der Figur ist weiterhin der Fahrzeugscheibenrand SR angedeutet. Zwei kammartig ausgebildete Sensorleitbahnen 3 und 4 sind über Leitbahnabschnitte 31 und 41 ineinandergreifend angeordnet. Diese Leitbahnabschnitte 31 und 41 bilden die eigentliche Sensorstruktur. Im trockenen Zustand der Fahrzeugscheibe erfolgt durch den räumlichen Abstand der Leitbahnabschnitte 31, 41 eine ausreichende elektrische Isolierung zwischen den Sensorleitbahnen 3 und 4. Die dargestellte Sensorstruktur weist somit im trockenen Zustand der Scheibe einen hohen Gesamtwiderstand auf.

Die Sensorleitbahnen 3 und 4 sind über den Fahrzeugscheibenrand SR mittels Kontakteinrichtungen 33 und 43 in das Fahrzeuginnere geführt und über elektrische Zuleitungen mit den Potentialen V1 und V2 der nur angedeuteten Auswerteeinheit 5 zur Ansteuerung der Scheibenwischer verbunden. Diese Auswerteeinheit 5 überwacht die Änderung des Gesamtwiderstandes der Sensorstruktur, welcher bei zunehmender Feuchtigkeit abnimmt. Ausgehend von dem gemessenen Signal werden die Scheibenwischer über die Auswerteeinheit 5 automatisch angesteuert.

Die Sensorleitbahnen 3 und 4 weisen eine Zuleitung auf, welche von dem Bereich der Sensorleitbahnen gebildet wird, die leitbahnabschnittfrei sind. Im Bereich dieser Zuleitungen 34 und 44, deren Abstand größer als 19 mm sein muß, ist parallel zur Sensorleitbahn jeweils eine Meßleitbahn 32 und 42 angeordnet, welche ungefähr 5 mm vom letzten, dem Fahrzeugscheibenrand zugewandten Leitbahnabschnitt 41 mit der Zuleitung 34 bzw. 44 elektrisch verbunden ist. Die Meßleitbahnen 32 und 42 weisen dabei wesentlich geringere geometrische Abmessungen auf als die Sensorleitbahnen 3 und 4. Die Meßleitbahnen 32 und 42 sind ebenfalls wie die Sensorleitbahnen 3 und 4 außen auf der Fahrzeugscheibe 2 angeordnet und werden elektrisch von der äußeren Fahrzeugscheibe 2 über den Fahrzeugscheibenrand SR in den Innenraum des Fahrzeuges mit Hilfe von jeweils einer Kontaktvorrichtung 35 und 45 geführt. Die Meßleitungen 32 und 42 sind über die Kontaktvorrichtung 35, 45 im Fahrzeuginneren über den Stecker 11 mit der Auswerteschaltung 5 verbunden. Die Auswerteeinheit 5 kann somit leicht den Widerstand der Zuleitungen 34 und 44 messen und das Sensorsignal mit Hilfe des auf den Zuleitungen 32 und 42 gemessenen Widerstandes korrigieren. Die Auswerteeinheit 5 läßt sich besonders einfach durch den Einsatz eines Mikroprozessors realisieren. Der Mikroprozessor kann sowohl die Funktion der Messung des Zuleitungswiderstandes als auch die eigentliche Überwachung und Korrektur des Sensorwiderstandes zur automatischen Ansteuerung der Scheibenwischer ausführen.

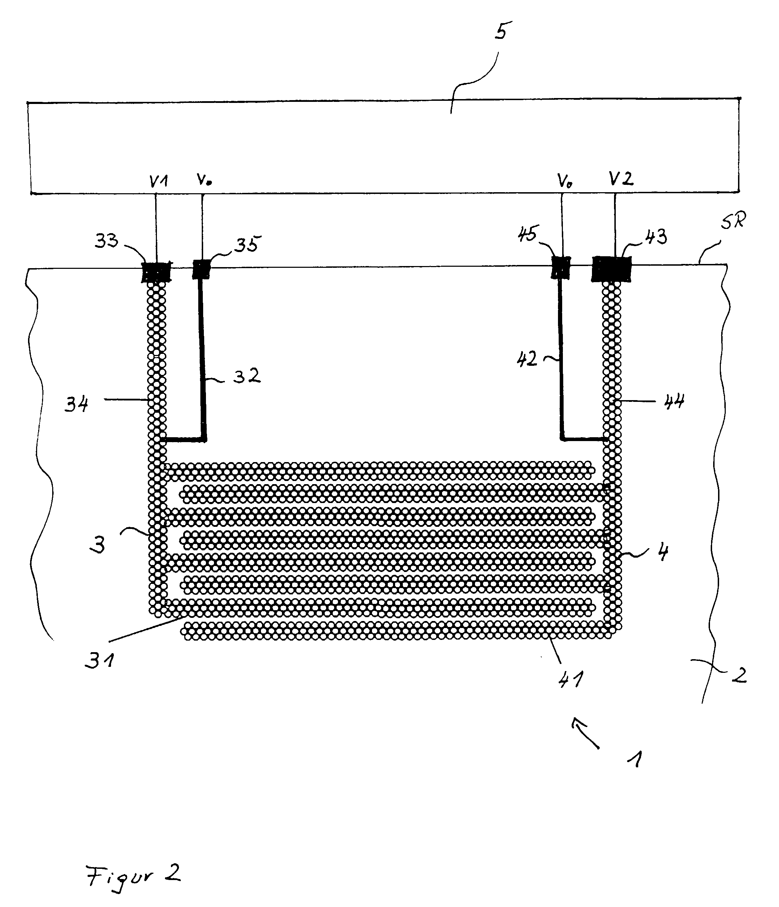

Figur 2 zeigt einen resistiven Regensensor, bei welchem gleiche Teile mit denselben Bezugszeichen wie in Figur 1 bezeichnet sind und der prinzipiell genauso aufgebaut ist wie der gemäß Figur 1. Die Sensorleitbahnen 3 und 4 sind über die gesamte Länge wellenförmig gestaltet, so daß sich die Breite der Leiterbahnen in diesen Abschnitten stetig ändert. Der konstante Abstand zwischen den Leitbahnabschnitten 31, 41 beträgt weniger als 1,6 mm, vorzugsweise 0,5 mm. Durch diese wellenförmige Ausführung der Leiterbahnränder wird die wirksame Länge und der effektive Querschnitt der Leiterbahn verändert, was einer Änderung des Gesamtwiderstandes des Sensors nach sich zieht.

Die Leiterbahnen 3 und 4 werden geometrisch gemäß der gewählten Außenkontur verlängert. Bei Ausformung als aneinandergeformte Halbkreise ergibt sich eine Verlängerung der Leiterbahn um den Faktor π/2.

Übliche Widerstandsstrukturen weisen eine Fläche von 70 bis 80 cm auf, wobei die wirksame Länge der Leiterbahnen annähernd 6 Meter beträgt. Bei gleicher Fläche beträgt die wirksame Länge der erfindungsgemäß gestalteten Widerstandsstruktur ungefähr 10 Meter.

Es besteht auch die Möglichkeit nur die Leiterbahnabschnitte 31 und 41 entsprechend zu gestalten. Gemäß Fig. 2 sind die Meßleitungen 32 und 42 als geschlossene Leitbahn dargestellt. Auch hier besteht die Möglichkeit die Leitbahnränder wellenförmig auszuführen.

Die in Fig. 2 dargestellte Sensorstruktur, bestehend aus den Leiterbahnen 3 und 4, den kammartig ineinandergreifenden Leitbahnabschnitten 31 und 41 sowie den Meßleitungen 32 und 42 ist einfach mit Hilfe eines Sputter-Ätzverfahrens auf der Fahrzeugscheibe hergestellt. Die die Leiterbahnen 3 und 4 bzw. die Leiterbahnabschnitte 31 und 41 bildenden Rasterpunkte sind dabei lichtdurchlässig ausgeführt.

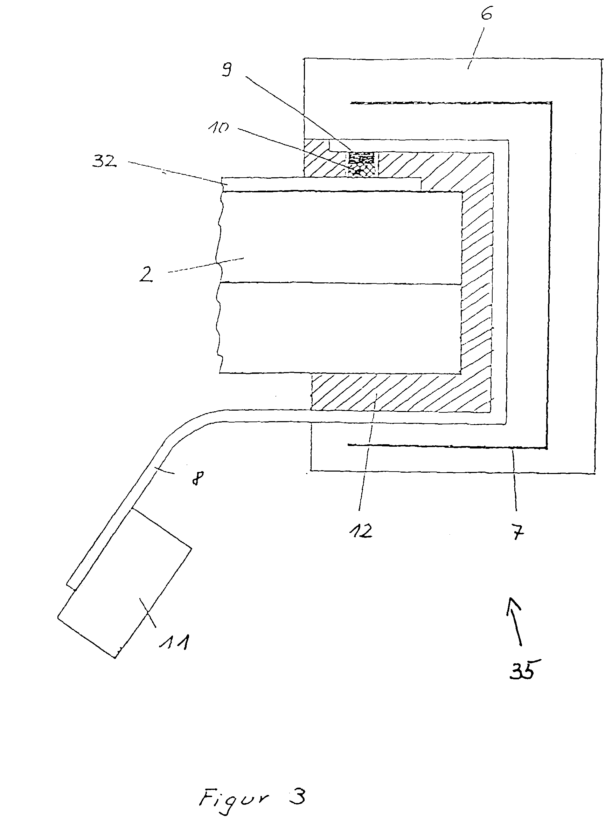

Eine Kontaktvorrichtung 33, 35, 43, 45, welche die auf der Fahrzeugscheibe vorhandenen Leiterbahnen 34, 44, 32, 42 mit einem Stecker 11 im Fahrzeuginnenraum kontaktiert, ist in Fig. 3 dargestellt.

Die Zuleitung 32 der Sensorleitbahn 3 ist auf der Fahrzeugscheibe 2 eines Kraftfahrzeuges innerhalb des Bereiches der Scheibenwischer aufgebracht. Die Zuleitung 32 besteht dabei vorzugsweise aus Chrom und Chromnitrid. Sie ist einige Atomlagen stark und wurde im Dünnschichtverfahren aufgetragen. Die Kontakteinheit besteht aus einem thermoplastischen Träger 6, in welchen zur mechanischen Stabilisierung eine Metalleinlage 7 eingebracht ist. Auf dem Träger 6 befindet sich eine Leiterbahn 8, die auf einer Flexfolie aufgedruckt ist. Diese Leiterbahn 2 besitzt gegenüberliegend der Zuleitung 32 einen Karbonkontaktpunkt 9, welcher von der Zuleitung 32 durch einen Leitkleber 10 getrennt ist und zu einer besseren Fixierung des Leitklebers dient. Die Leiterbahn 8 der Kontaktvorrichtung verbindet somit die Zuleitung 32 des Sensors über den Karbonkontaktpunkt 9 und den Leitkleber 10 elektrisch mit einem im Fahrzeug befindlichen angecrimmten Stecker 11, der die Verbindung zu der nicht dargestellten Auswerteeinheit 5 herstellt. Der Stekker 11 wird dabei direkt an die Kontakteinheit 35 montiert.

Auf dem Träger 6, z. B. einer Captonfolie, und der auf der Flexfolie aufgedruckten Leiterbahn 8 der Kontaktvorrichtung 35 ist eine Heißkleberschicht 12 aufgetragen, welche um den Kontaktpunkt 3 herum ausgespart bleibt.

Die beschriebene Kontakteinheit wird im erwärmten Zustand formschlüssig um die Kante SR der Fahrzeugscheibe 2 gebogen, so daß eine stabile leitende Verbindung zwischen Zuleitung 32, Leitkleber 10, Karbonkontaktpunkt 9, Leiterbahn 8 und Stecker 11 entsteht.

## Patentansprüche

1. Regensensor, bestehend aus einer auf der Außenseite einer Fahrzeugscheibe (2) eines Kraftfahrzeuges angeordneten Sensorstruktur (31,41), welche mit mindestens einer Zuleitung (34,44) zur Herstellung einer leitenden Verbindung der Sensorstruktur (31,41) mit einem elektrischen Potential (V₁,V₂) innerhalb des Kraftfahrzeuges verbunden ist, **dadurch gekennzeichnet**, daß zur Bestimmung des Widerstandes der Zuleitung eine Meßleitung (32, 42) außerhalb der Sensorstruktur (31, 41) mit der Zuleitung (34, 44) elektrisch verbunden ist.

2. Regensensor nach Anspruch 1, **dadurch gekennzeichnet**, daß die Meßleitung (32, 42) zwischen Fahrzeugscheibenrand (SR) und Sensorstruktur (31, 41) mit der Zuleitung (34, 44) verbunden ist.

3. Regensensor nach Anspruch 2, **dadurch gekennzeichnet**, daß die Meßleitung (32, 42) in Nähe der Sensorstruktur (31, 41) mit der Zuleitung (34, 44) verbunden ist.

4. Regensensor nach Anspruch 3, **dadurch gekennzeichnet**, daß die Meßleitung (32, 42) in einem Abstand von mindestens 5 mm von der Sensorstruktur (31, 41) mit der Zuleitung (34, 44) verbunden ist.

5. Regensensor nach einem der vorhergehenden Ansprüche 1 bis 4, **dadurch gekennzeichnet**, daß die Meßleitung (32,42) annähernd parallel zur Zuleitung (34, 44) angeordnet ist, und über den Fahrzeugscheibenrand (SR) mit dem Fahrzeuginneren kontaktiert ist.

6. Regensensor nach einem der vorhergehenden Ansprüche 1, **dadurch gekennzeichnet**, daß sowohl die Zuleitung (34, 44) als auch die Meßleitung (32, 42) in Dünnschichttechnik hergestellt sind.

7. Regensensor nach Anspruch 1, **dadurch gekennzeichnet**, daß sowohl die Zuleitung (34, 44) als auch die Meßleitung (32, 42) mit einer Auswerteelektronik (5) verbunden sind, die gleichzeitig zur Ansteuerung der Scheibenwischer des Kraftfahrzeuges dient.

8. Regensensor nach einem der vorhergehenden Ansprüche, **dadurch gekennzeichnet**, daß die Sensorstruktur aus zwei kammartig ausgebildeten Leitbahnen (3, 4) besteht, deren ineinandergreifend angeordnete Leitbahnabschnitte (31, 41) die Sensorstruktur bilden und deren leitbahnabschnittfreien Bereiche je eine Zuleitung (34, 44) bilden.

9. Regensensor nach Anspruch 6, **dadurch gekennzeichnet**, daß zumindest die Breite der ineinandergreifenden Leitbahnabschnitte (31, 41) der Sensorstruktur über ihre gesamte Länge unkonstant gestaltet ist.

10. Regensensor nach Anspruch 9, **dadurch gekennzeichnet**, daß mindestens ein Rand der ineinandergreifend angeordneten Leitbahnabschnitte (31, 41) wellenförmig gestaltet ist.

11. Regensensor nach Anspruch 10, **dadurch gekennzeichnet**, daß Leitbahnabschnitte (41, 31) lichtdurchlässige Rasterpunkte aufweisen.

12. Regensensor nach Anspruch 1 und 5, **dadurch gekennzeichnet**, daß die Zuleitung (34, 44) und/oder die Meßleitung (32, 42) über eine Kontaktvorrichtung (33, 35, 43, 45) mit einem elektrischen Anschlußkontakt innerhalb des Kraftfahrzeuges verbunden ist.

13. Regensensor nach Anspruch 12, **dadurch gekennzeichnet**, daß die Kontaktvorrichtung (33, 35, 43, 45) eine auf einem flexiblen Träger (6) angeordnete Kontaktleiterbahn (8) auf der Fahrzeugscheibe, deren Randbereich (SR) umgreifend angeordnet ist, wobei die Kontaktleiterbahn (8) im fahrzeugäußeren Bereich mit der Zuleitung (32) und im fahrzeuginneren Bereich mit einem Anschlußkontakt (11) leitend verbunden ist.

14. Regensensor nach Anspruch 13, **dadurch gekennzeichnet**, daß der flexible Träger (6) mittels einer Heißklebeschicht (12) auf der Fahrzeugscheibe (2) befestigt ist.

15. Regensensor nach Anspruch 13, **dadurch gekennzeichnet**, daß die Kontaktleiterbahn (8) mittels eines Leitklebers (10) mit der Zuleitung (32) verbunden ist.

## Claims

1. Rain sensor comprising a sensor structure (31,41), which is arranged on the outside of a vehicle window pane (2) of a motor vehicle and which is connected to at least one supply lead (34,44) for producing a conducting connection of the sensor structure (31,41) to an electric potential (V1,V2) inside the motor vehicle, characterized in that, in order to determine the resistance of the supply lead a measuring lead (32,42) is electrically connected to the supply lead (34,44) outside the sensor structure (31,41).

2. Rain sensor according to Claim 1, characterized in that the measuring lead (32,42) is connected to the supply lead (34,44) between the vehicle window pane edge (SR) and sensor structure (31,41).

3. Rain sensor according to Claim 2, characterized in that the measuring lead (32,42) is connected to a supply lead (34,44) in the vicinity of the sensor structure (31,41).

4. Rain sensor according to Claim 3, characterized in that the measuring lead (32,42) is connected to the supply lead (34,44) at a distance of at least 5 mm from the sensor structure (31,41).

5. Rain sensor according to one of the preceding Claims 1 to 4, characterized in that the measuring lead (32,42) is arranged approximately parallel to the supply lead (34,44), and makes contact with the vehicle interior via the vehicle window pane edge (SR).

6. Rain sensor according to one of the preceding claims, characterized in that both the supply lead (34,44) and the measuring lead (32,42) are produced using thin-film technology.

7. Rain sensor according to Claim 1, characterized in that both the supply lead (34,44) and the measuring lead (32,42) are connected to an electronic evaluation system (5) which simultaneously serves to drive the wipers of the motor vehicle.

8. Rain sensor according to one of the preceding claims, characterized in that the sensor structure comprises two conductor tracks (3,4) which are of comblike construction and whose conductor track sections (31,41) arranged interlocking with one another form the sensor structure, and whose regions free from conductor track sections each form a supply lead (34,44).

9. Rain sensor according to Claim 6, characterized in that at least the width of the interlocking conductor track sections (31,41) of the sensor structure is of irregular configuration over its entire length.

10. Rain sensor according to Claim 9, characterized in that at least one edge of the conductor track sections (31,41) arranged interlocking with one another is of wavy configuration.

11. Rain sensor according to Claim 10, characterized in that conductor track sections (31,41) have transparent array points.

12. Rain sensor according to Claims 1 and 5, characterized in that the supply lead (34,44) and/or the measuring lead (32,42) are connected via a contact device (33,35,43,45) to an electric terminal contact inside the motor vehicle.

13. Rain sensor according to Claim 12, characterized in that the contact device (33,35,43,45) is a contact conductor track (8) arranged on a flexible carrier (6) on the vehicle window pane, whose edge region (SR) is arranged in an enveloping fashion, the contact conductor track (8) being connected in a conducting fashion to the supply lead (32) in the outer vehicle region, and to a terminal contact (11) in the inner vehicle region.

14. Rain sensor according to Claim 13, characterized in that the flexible carrier (6) is fastened on the vehicle window pane (2) by means of a hot-melt adhesive layer (12).

15. Rain sensor according to Claim 13, characterized in that the contact conductor track (8) is connected to the supply lead (32) by means of a conductive adhesive (10).

## Revendications

1. Capteur de pluie, constitué d'une structure de capteur (31, 41) disposée sur la face extérieure d'une vitre (2) d'une automobile, qui est reliée à l'intérieur de l'automobile à au moins une amenée (34, 44) pour établir une liaison conductrice de la structure de capteur (31, 41) avec un potentiel électrique (V1, V2), caractérisé en ce qu'une liaison de mesure (32, 42) est reliée électriquement à l'amenée (34, 44), à l'extérieur de la structure de capteur (31, 41), pour déterminer la résistance de l'amenée.

2. Capteur de pluie selon la revendication 1, caractérisé en ce que la liaison de mesure (32, 42) entre le bord de la vitre du véhicule (SR) et la structure de capteur (31, 41) est reliée à l'amenée (34, 44).

3. Capteur de pluie selon la revendication 2, caractérisé en ce que la liaison de mesure (32, 42) à proximité de la structure de capteur (31, 41) est reliée à l'amenée (34, 44).

4. Capteur de pluie selon la revendication 3, caractérisé en ce que la liaison de mesure (32, 42) est reliée à l'amenée (34, 44) à une distance d'au moins 5 mm de la structure de capteur (31, 41).

5. Capteur de pluie selon l'une des revendications précédentes 1 à 4, caractérisé en ce que la liaison de mesure (32, 42) est disposée de manière approximativement parallèle à l'amenée (34, 44) et est raccordée à travers le bord de la vitre du véhicule (SR) à l'intérieur du véhicule.

6. Capteur de pluie selon l'une des revendications précédentes 1, caractérisé en ce que l'amenée (34, 44) ainsi que la liaison de mesure (32, 42) sont fabriquées par la technique des couches minces.

7. Capteur de pluie selon la revendication 1, caractérisé en ce que l'amenée (34, 44) ainsi que la liaison de mesure (32, 42) sont reliées à une électronique d'exploitation (5) qui sert simultanément à la commande d'essuie-glace du véhicule.

8. Capteur de pluie selon l'une des revendications précédentes, caractérisé en ce que la structure de capteur est constituée de deux pistes conductrices (3, 4) en forme de peigne dont les sections de pistes conductrices (31, 41) imbriquées forment la structure de capteur et dont les sections de pistes conductrices forment chacune une amenée (34, 44).

9. Capteur de pluie selon la revendication 6, caractérisé en ce qu'au moins la largeur des sections de pistes conductrices (31, 41) imbriquées de la structure de capteur a une forme non constante sur toute sa longueur.

10. Capteur de pluie selon la revendication 9, caractérisé en ce qu'au moins un bord des sections de pistes conductrices (31, 41) imbriquées a une forme ondulée.

11. Capteur de pluie selon la revendication 10, caractérisé en ce que les sections de pistes conductrices (41, 31) imbriquées présentent une trame de points transparents.

12. Capteur de pluie selon les revendications 1 et 5, caractérisé en ce que l'amenée (34, 44) et/ou la liaison de mesure (32, 42) sont reliées par l'intermédiaire d'un contact (33, 35, 43, 45) à un contact de raccordement électrique à l'intérieur du véhicule.

13. Capteur de pluie selon la revendication 12, caractérisé en ce que le dispositif de contact (33, 35, 43, 45), une piste conductrice de contact (8) disposée sur un support flexible (6), est disposé sur la vitre du véhicule en enserrant sa périphérie (SR), la piste conductrice de contact (8) étant reliée électriquement dans l'espace extérieur du véhicule à l'amenée (32) et dans l'espace intérieur du véhicule à un contact de raccordement (11).

14. Capteur de pluie selon la revendication 13, caractérisé en ce que le support flexible (6) est fixé sur la vitre du véhicule (2) au moyen d'une couche thermocollante (12).

15. Capteur de pluie selon la revendication 13, caractérisé en ce que la piste conductrice de contact (8) est reliée à l'amenée (32) au moyen d'une colle conductrice (10).
